# FASCICULE DE BREVET EUROPEEN

(11) **EP 3 335 947 B1**
(45) Date de publication et mention de la délivrance du brevet: **19.06.2019**
(21) Numéro de dépôt: 17207895.8
(22) Date de dépôt: 18.12.2017
(51) Int. Cl.: B60S 1/38

(54) **SYSTÈME D'ESSUYAGE POUR VÉHICULE AUTOMOBILE**
WISCHERSYSTEM FÜR KRAFTFAHRZEUG
MOTOR VEHICLE WIPER SYSTEM

(30) Priorité: 19.12.2016 FR 1662782
(43) Date de publication de la demande: 20.06.2018
(73) Titulaire: Valeo Systèmes d'Essuyage, 78322 Le Mesnil Saint Denis (FR)
(72) Inventeur: MARQUET, Chantal, 63500 ISSOIRE (FR); CAILLOT, Gérald, 78322 LE MESNIL SAINT DENIS (FR)
(74) Mandataire: Valeo Systèmes d'Essuyage

(56) Documents cités:
- EP-A1- 2 821 299
- US-A1- 2013 192 017
- US-A1- 2013 193 129

## Description

L'invention concerne le domaine technique des systèmes d'essuyage pour véhicule automobile. L'invention concerne en particulier l'alimentation électrique d'éléments chauffants qui sont utilisés dans de tels systèmes d'essuyage.

On connait des systèmes d'essuyage qui comprennent des balais d'essuie-glace. Ces balais d'essuie-glace sont munis chacun d'un module de chauffage ou élément chauffant, par exemple un fil chauffant. Chacun des éléments chauffants est conçu pour réchauffer l'un des balais d'essuie-glace.

Le réchauffement des balais d'essuie-glace permet avantageusement de les rendre moins rigides, permettant ainsi d'améliorer la qualité de l'essuyage. En outre, en cas de chute de neige ou de températures négatives, le chauffage du balai d'essuie-glace permet de faire fondre la neige ou la glace qui se serait accumulée autour du balai d'essuie-glace. Le chauffage du balai d'essuie-glace permet alors de le désentraver avant sa mise en mouvement.

Pour alimenter en énergie électrique ces éléments chauffants, il est connu d'utiliser un circuit électrique comprenant notamment un dispositif d'alimentation électrique ainsi qu'un fusible de protection conçu pour protéger les composants du circuit électrique d'une intensité de courant trop élevée.

Or, les modules de chauffage sont généralement issus d'un matériau métallique dont la résistivité électrique et donc la résistance électrique augmentent avec la température. Ainsi, lorsque l'on démarre l'alimentation électrique des éléments chauffants, ceux-ci présentent initialement une résistivité électrique faible. En conséquence, l'intensité du courant initial, aussi appelé courant d'appel, qui les traverse est très élevée. C'est seulement lorsque la température des éléments chauffants commence à augmenter que leur résistivité augmente et que l'intensité électrique les parcourant décroît.

Ainsi, lorsque le circuit électrique comprend plusieurs éléments chauffants, l'addition de ces fortes intensités électriques de départ peut alors conduire à la destruction du fusible de protection où à la détérioration du circuit électrique. Les éléments chauffant deviennent alors inopérants et le chauffage des balais d'essuie-glace n'est plus possible. US 2013/0192017 A1 montre un système d'essuyage selon le préambule de la première revendication.

L'invention se propose notamment de résoudre ces inconvénients. Pour ce faire, l'invention propose un système d'essuyage pour véhicule automobile comprenant :
- au moins deux balais d'essuie-glace dont un premier balai d'essuie-glace et un deuxième balai d'essuie-glace,
- un dispositif de chauffage comprenant un premier élément chauffant, configuré pour chauffer le premier balai d'essuie-glace, et un deuxième élément chauffant, configuré pour chauffer le deuxième balai d'essuie-glace,
- un dispositif d'alimentation électrique configuré pour alimenter en électricité les premier et deuxième éléments chauffants et
- un module de contrôle,
le système d'essuyage étant caractérisé en ce que le module de contrôle est configuré pour, lors de l'activation du dispositif de chauffage, retarder d'une durée de temporisation Δ**t** l'alimentation électrique du deuxième élément chauffant par rapport à l'alimentation électrique du premier élément chauffant.

Selon différents aspects de l'invention, qui pourront être pris ensemble ou séparément :
- les premier et deuxième éléments chauffants et le dispositif d'alimentation électrique sont reliés électriquement par un même circuit électrique,
- le premier élément chauffant et/ou le deuxième élément chauffant sont issus au moins en partie d'un matériau dont la résistivité électrique augmente avec sa température,
- le module de contrôle est configuré pour autoriser l'alimentation électrique du deuxième élément chauffant à un instant t lorsque **I₁** ≤ **I_{MAX}** - **I₂,** où **I_{MAX}** correspond à une valeur limite d'intensité électrique prédéterminée, où **I₁** correspond à l'intensité électrique parcourant le premier élément chauffant à l'instant t et où **I₂** correspond à l'intensité électrique qui parcourra le deuxième élément chauffant lors du démarrage de l'alimentation électrique dudit deuxième élément chauffant,
- le circuit électrique comprend en outre un fusible traversé par un courant d'intensité **I_{F} = I₁** + **I₂**, le fusible étant conçu pour ouvrir le circuit électrique lorsque **I_{F} ≥ I_{MAX},**
- la durée de temporisation Δ**t** est une constante prédéterminée,
- le dispositif d'alimentation électrique est conçu pour appliquer une tension **U** au circuit électrique, la tension **U** étant définie en fonction de la vitesse **v** du véhicule automobile et/ou de la température **Tₑₓₜ** à l'extérieur du véhicule automobile,
- le module de contrôle comprend un interrupteur, dit interrupteur de retardement, connecté à un minuteur,
- l'un des balais d'essuie-glace, dit balai conducteur, est situé sur le pare-brise avant d'un véhicule automobile et du côté conducteur, le premier élément chauffant étant configuré pour chauffer le balai conducteur.

L'invention concerne encore un procédé d'activation pour un dispositif d'essuyage tel que décrit ci-avant, le procédé comprenant les étapes suivantes, dans cet ordre :
- activation du premier élément chauffant,
- temporisation,
- activation du deuxième élément chauffant.

Selon différents aspects de l'invention, qui pourront être pris ensemble ou séparément :
- l'étape de temporisation comprend une sous-étape de détermination en temps réel de l'intensité électrique **I₁** traversant le premier élément chauffant,
- l'étape de temporisation correspond à une attente d'une durée prédéterminée.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés :
- La figure 1 est une vue de face, schématique, du pare-brise avant d'un véhicule automobile muni d'une partie d'un système d'essuyage dans un mode de réalisation conforme à l'invention.
- La figure 2 est une représentation schématique d'un exemple de circuit électrique reliant deux éléments chauffants conçus pour équiper le système d'essuyage de la figure 1, dans un mode de réalisation conforme à l'invention.
- La figure 3 est un graphique représentant, selon un mode de réalisation conforme à l'invention, l'évolution en fonction du temps de l'intensité du courant traversant le premier élément chauffant, de l'intensité du courant traversant le deuxième élément chauffant et de la somme de ces deux intensités.

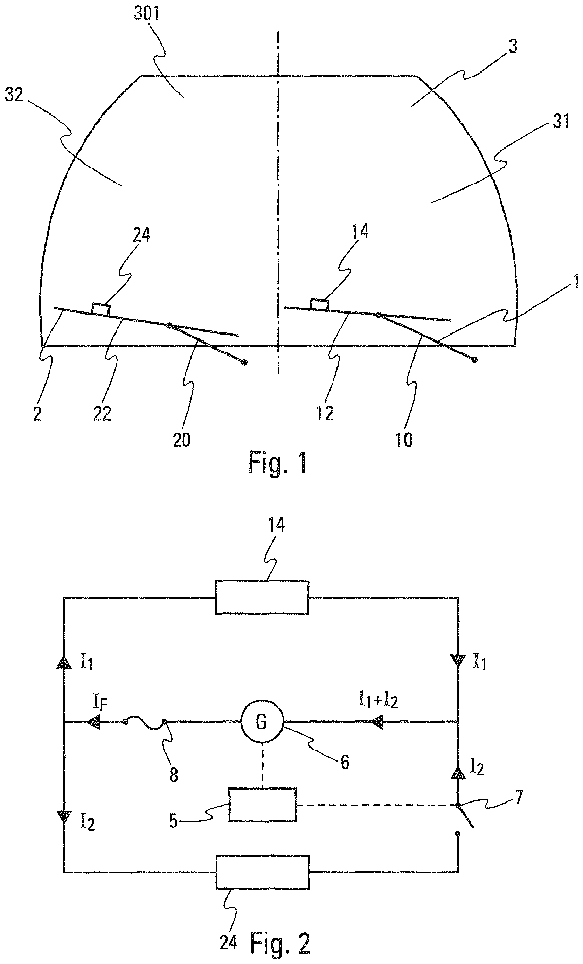

Comme illustré à la figure 1, le système d'essuyage comprend ici au moins deux dispositifs d'essuyage 1, 2 dont un premier dispositif d'essuyage 1 et un deuxième dispositif d'essuyage 2. Chaque dispositif d'essuyage 1, 2 comprend notamment un bras 10, 20 et un balai d'essuie-glace 12, 22 assemblés l'un à l'autre. Chacun des bras 10, 20 est conçu pour entraîner en rotation le balai d'essuie-glace 12, 22 auquel il est assemblé.

Chacun des dispositifs d'essuyage 1, 2 est conçu pour essuyer une partie d'une vitre 3 du véhicule automobile. En particulier, les balais d'essuie-glace 12, 22, lorsqu'ils sont entraînés par leurs bras 10, 20 respectifs, sont conçus pour essuyer la surface extérieure 301 de la vitre 3 du véhicule automobile.

A cet effet, chacun des balais d'essuie-glace 12, 22 comprend notamment une lame d'essuyage, non illustrée, conçue pour être en contact avec la surface extérieure 301 de la vitre lorsque le balai d'essuie-glace 12, 22 se déplace le long de la vitre 3.

Ici, la vitre 3 du véhicule automobile est un pare-brise avant 3 du véhicule automobile. Autrement dit, les deux dispositifs d'essuyage 1, 2 sont agencés à l'avant du véhicule automobile et sont conçus pour essuyer le pare-brise avant 3.

En variante non illustrée, la vitre 3 du véhicule automobile est par exemple une vitre arrière du véhicule automobile. Dans une autre variante non illustrée, l'un des dispositifs d'essuyage 1, 2 est agencé à l'avant du véhicule automobile et est conçu pour essuyer le pare-brise avant 3 tandis que l'autre des dispositifs d'essuyage 1, 2 est, lui, agencé à l'arrière du véhicule automobile et est conçu pour essuyer la vitre arrière du véhicule automobile.

Le premier dispositif d'essuyage 1 est ici agencé du côté conducteur 31 du pare-brise avant 3. Le deuxième dispositif d'essuyage 2 est lui agencé du côté passager 32 du pare-brise avant 3. Le balai d'essuie-glace 12 du premier dispositif d'essuyage 1, est appelé dans la suite premier balai d'essuie-glace 12. Le balai d'essuie-glace du deuxième dispositif d'essuyage 2 est appelé dans la suite deuxième balai d'essuie-glace 22.

En d'autres termes, le premier balai d'essuie-glace 12 est conçu pour essuyer une première moitié 31 du pare-brise avant 3 située en face du conducteur tandis que le deuxième balai d'essuie-glace 24 est lui conçu pour essuyer l'autre moitié 32 du pare-brise avant 3.

Le système d'essuyage comprend en outre un dispositif de chauffage. Le dispositif de chauffage comprend lui-même une pluralité d'éléments chauffants 14, 24. En particulier ici, le dispositif de chauffage comprend au moins deux éléments chauffants 14, 24 dont un premier élément chauffant 14 et un deuxième élément 24 chauffant.

Ici, on note que le dispositif de chauffage comprend autant d'éléments chauffants 14, 24 que de dispositifs d'essuyage 1, 2. En variante non illustrée, il est possible de munir l'un au moins des dispositifs d'essuyage 1, 2 d'une pluralité d'éléments chauffants 14, 24.

Ici, en particulier, le premier élément chauffant 14 est agencé de manière à chauffer le premier balai d'essuie-glace 12. Le deuxième élément chauffant 24 est, lui, conçu pour chauffer le deuxième balai d'essuie-glace 22. En variante non illustrée, il est possible d'agencer le premier élément chauffant 14 de manière qu'il chauffe le deuxième balai d'essuie-glace 22 et le deuxième élément chauffant 24 de manière qu'il chauffe le premier balai d'essuie-glace 12.

Ici, le premier élément chauffant 14 est issu au moins en partie d'un matériau dont la résistivité électrique augmente avec sa température. Par conséquent, la résistance électrique **R₁** du premier élément chauffant 14 augmente avec sa température. En particulier ici, le premier élément chauffant 14 est issu d'un matériau métallique. Plus particulièrement encore, ledit matériau est ici du cuivre, bien qu'il soit possible d'envisager d'autres matériaux.

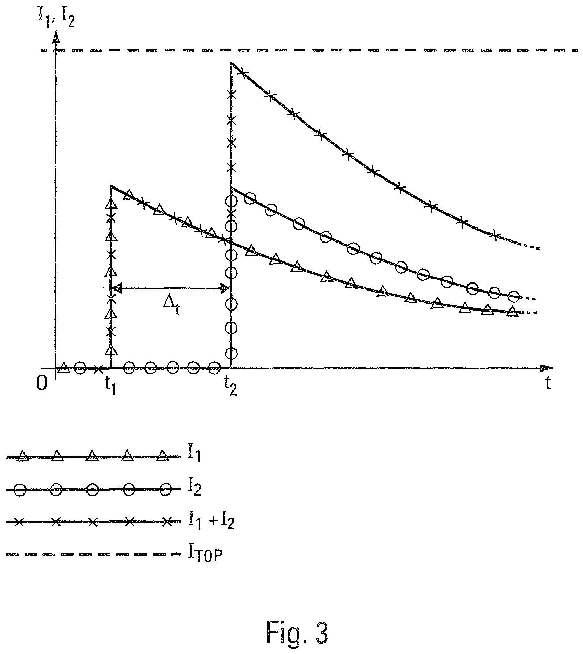

Comme évoqué ci-dessus, la résistance électrique **R₁** du premier élément chauffant 14 est initialement relativement faible et, corrélativement, l'intensité **I₁** traversant le premier élément chauffant 14 est relativement élevée. Après quelques secondes, la résistivité électrique et donc la résistance électrique **R₁** du premier élément chauffant 14 augmente avec sa température et, comme illustré à la figure 3, l'intensité **I₁** traversant le premier élément chauffant 14 décroît alors progressivement.

Le deuxième élément chauffant 24 est par exemple issu du même matériau que le premier élément chauffant.

Comme illustré à la figure 2, le système d'essuyage comprend en outre un module de contrôle 5 et un dispositif d'alimentation électrique 6.

Le dispositif d'alimentation électrique 6 est conçu pour alimenter en électricité les premier 14 et deuxième 24 éléments chauffants. Le dispositif d'alimentation électrique 6 est par exemple une batterie, un générateur ou une pile.

A l'activation du dispositif de chauffage, le module de contrôle 5 est configuré pour décaler dans le temps le déclenchement de l'alimentation électrique de chacun des éléments chauffants 14, 24. Dans la suite, on appellera « activation de l'élément chauffant », le déclenchement de l'alimentation électrique d'un élément chauffant.

En particulier ici, le module de contrôle 5 est configuré pour retarder l'activation du deuxième élément chauffant 24 par rapport à l'activation du premier élément chauffant 14. En d'autres termes, le module de contrôle 5 est conçu de sorte que le démarrage de l'alimentation électrique du deuxième élément chauffant 24 intervienne après le démarrage de l'alimentation électrique du premier élément chauffant 14.

Autrement dit encore, comme illustré à la figure 3, le module de contrôle 5 est configuré pour, à un instant **t₁**, déclencher l'alimentation électrique du premier élément chauffant 14, puis, à un instant postérieur **t₂**, déclencher l'alimentation électrique du deuxième élément chauffant 24. On note Δ**t** la durée séparant **t₂** et **t₁**. Ici, Δ**t** est non nulle. La durée Δ**t** est par exemple comprise entre 1s et 60s. La durée peut par exemple être égale ou sensiblement égale à 30s. Cette durée dépend notamment de la vitesse à laquelle l'intensité **I₁** traversant le premier élément chauffant 14 décroît après l'activation du premier élément chauffant 14.

On note que le fait d'alimenter le premier élément chauffant 14 en premier permet de chauffer en priorité le premier balai d'essuie-glace 1 situé du côté conducteur 31. Ainsi, la qualité d'essuyage de la partie 31 du pare-brise 3 située directement devant le conducteur est améliorée en priorité.

L'activation du dispositif de chauffage peut être déclenchée manuellement par un utilisateur, notamment par l'intermédiaire du tableau de bord. En variante, le dispositif de chauffage peut également être activé automatiquement par le module de contrôle 5 dès lors par exemple que la température extérieure **Tₑₓₜ** au véhicule automobile atteint une valeur prédéterminée, par exemple 0°C.

Ici, comme cela est visible à la figure 2, le premier élément chauffant 14, le deuxième élément chauffant 24 et le dispositif d'alimentation électrique 6 sont reliés électriquement par un même circuit électrique.

En particulier, les premier 14 et deuxième 24 éléments chauffants sont connectés en parallèle. Ainsi, dans le circuit électrique, le dispositif d'alimentation électrique 6 est conçu pour appliquer une tension **U₁** aux bornes du premier élément chauffant 14 et une tension **U₂** aux bornes du deuxième élément chauffant 24.

On note que le dispositif d'alimentation électrique 6 est par exemple conçu pour appliquer une même tension **U** aux bornes de chaque élément chauffant 14, 24 de sorte que **U=U₁=U₂.**

Afin d'adapter le chauffage des balais d'essuie-glace 22, 12, le dispositif d'alimentation électrique 6 peut avantageusement être conçu pour délivrer une tension **U** qui varie en fonction notamment de la température extérieure **Tₑₓₜ** et/ou de la vitesse **v** de déplacement du véhicule automobile. Dans ce cas, **U=U** (**Tₑₓₜ,v**). En effet, plus la vitesse **v** du véhicule est élevée et plus la température extérieure **Tₑₓₜ** est faible, plus les balais d'essuie-glace 22, 12 nécessitent un chauffage important.

Dans la suite, on appelle **I₁** l'intensité électrique qui traverse le premier élément chauffant 14 lorsque celui-ci est alimenté en électricité par le dispositif d'alimentation électrique 6. On appelle **I₂** l'intensité électrique qui traverse le deuxième élément chauffant 24 lorsque le celui-ci est alimenté en électricité par le dispositif d'alimentation électrique 6.

Ici, le circuit électrique comprend en outre un fusible de protection 8. Le fusible de protection 8 est traversé par un courant d'intensité **I_{F}** qui correspond à la somme des intensités **I₁** et **I₂** qui traversent respectivement le premier élément chauffant 14 et le deuxième élément chauffant 24. Le fusible de protection 8 est ici conçu pour ouvrir le circuit électrique lorsqu'**I_{F}** atteint une valeur seuil **I_{TOP}.**

Ici, le circuit électrique comprend en outre un interrupteur 7, dit interrupteur de retardement. L'interrupteur de retardement 7 peut adopter deux positions dont une position fermée et une position ouverte. L'interrupteur de retardement 7 est ici agencé dans la branche du circuit électrique qui est directement reliée au deuxième élément chauffant 24.

L'interrupteur de retardement 7 est en particulier conçu de sorte qu'en position ouverte l'alimentation en électricité du deuxième élément chauffant 24 soit empêchée. A l'inverse, l'interrupteur de retardement 7 est conçu de sorte qu'en position fermée l'alimentation en électricité du deuxième élément chauffant 24 soit autorisée. L'interrupteur de retardement 7 est ici contrôlé par le module de contrôle 5.

Avant l'activation du dispositif de chauffage, c'est-à-dire avant **t₁** l'interrupteur de retardement 7 est en position ouverte. L'alimentation en électricité du deuxième élément chauffant 24 est donc empêchée. Lorsqu'intervient l'activation du dispositif de chauffage à **t₁**, l'interrupteur de retardement 7 est toujours en position ouverte de sorte que l'alimentation en électricité du deuxième élément chauffant 24 reste empêchée. Ainsi, entre **t₁** et **t₂** seul le premier élément chauffant 14 est alimenté en électricité.

Pour activer l'alimentation en électricité du deuxième élément chauffant 24 à **t₂**, le module de contrôle 5 fait passer l'interrupteur de retardement 7 de la position ouverte à la position fermée, ce qui autorise alors l'alimentation en électricité du deuxième élément chauffant 24.

Ainsi, comme illustré à la figure 3, durant la période Δ**ₜ** qui s'étend entre **t₁** et **t₂**, seul le premier élément chauffant est alimenté en électricité. Ainsi, durant cette période, le fusible de protection n'est traversé que par une intensité égale à **I₁**. Après l'écoulement de Δ**ₜ**, c'est-à-dire après **t₂,** à la fois le premier élément chauffant 14 et le deuxième élément chauffant 24 sont alimentés simultanément en électricité. Comme le pic d'intensité électrique **I₁** lié à la faible résistivité initiale du premier élément chauffant 14 est atténué après l'écoulement de la période Δ**ₜ**, l'intensité **I₁** est alors suffisamment faible pour permettre l'activation du deuxième élément chauffant 24 sans provoquer la destruction du fusible de protection 8.

Comme cela sera détaillé par la suite, le module de contrôle 5 est conçu pour n'autoriser l'alimentation électrique du deuxième élément chauffant 24 que lorsque l'intensité **I₁** est suffisamment faible pour éviter que, à l'allumage du deuxième élément chauffant 24, l'addition des deux intensités **I₁** et **I₂** ne provoque une coupure de courant ou une détérioration d'éléments du circuit électrique.

En particulier ici, le module de contrôle 5 est conçu pour n'autoriser l'alimentation électrique du deuxième élément chauffant 24 que lorsqu'**I₁** est suffisamment faible pour ne pas faire sauter le fusible de protection 8 en activant le deuxième élément chauffant 24. En d'autres termes encore, le module de contrôle 5 est ici conçu pour éviter que l'intensité **I_{F}** traversant le fusible de protection 8 n'atteigne ou ne dépasse la valeur seuil **I_{TOP}** lors de l'activation du deuxième élément chauffant 24.

On note qu'ici la résistivité du deuxième élément chauffant 24 reste, elle, sensiblement constante tant que le deuxième élément chauffant 24 n'est pas alimenté en électricité. En particulier, on note que la résistivité du deuxième élément chauffant 24, et donc sa résistance électrique **R₂**, ne dépend pas de la température du premier élément chauffant 14.

Encore autrement dit, le module de contrôle 5 est conçu pour n'autoriser l'alimentation électrique du deuxième élément chauffant 24 que lorsque la résistance électrique **R₁** du premier élément chauffant 14 est suffisamment élevée pour qu'immédiatement après l'activation du deuxième élément chauffant 24 l'équation suivante soit vérifiée : **I₁(t₂)+I₂(t₂)≤I_{TOP}** où **I₁(t₂)** correspond à la valeur de **I₁** à **t₂** et **I₂(t₂)** correspond à la valeur de **I₂** à **t₂**.

En d'autres termes encore, le module de contrôle est ici configuré pour n'autoriser l'alimentation électrique du deuxième élément chauffant qu'à partir du moment **t₂** où l'intensité électrique **I₁(t₂**) traversant le premier élément chauffant est inférieure à **I_{TOP}** - **(U₂/R₂).**

En variante, afin de conserver une marge d'erreur, on pourra configurer le module de contrôle 5 de sorte qu'à l'activation du deuxième élément chauffant 24 soit vérifiée l'équation **I₁+I₂≤I_{MAX},** où **I_{MAX}** est une valeur seuil au moins légèrement inférieure à **I_{TOP}.** Par exemple, on peut choisir **I_{MAX} = 0,9*I_{TOP}**. En variante, on peut choisir **I_{MAX}=I_{TOP.}**

Selon un premier mode de réalisation, le module de contrôle 5 est configuré pour mesurer, par exemple en temps réel, l'intensité électrique **I₁** traversant le premier élément chauffant 14. En variante, on pourra déduire l'intensité **I₁** d'une mesure de la résistance **R₁**.

Selon un deuxième mode de réalisation, le module de contrôle 5 est configuré pour différer l'activation des premier 14 et deuxième 24 éléments chauffants d'une durée Δ**_{tfixe}** prédéterminée. Dans ce mode de réalisation, il n'est ainsi pas nécessaire de procéder à une mesure de l'intensité **I₁**, ni même à une mesure de la résistance électrique **R₁**. Ici, on choisit une durée Δ_{tfixe} prédéterminée suffisamment grande pour s'assurer que l'intensité **I₁** ait le temps de décroitre suffisamment pendant Δ_{tfixe}, de sorte qu'à l'activation du deuxième élément chauffant 24, la somme de **I₁** et **I₂** soit inférieure à **I_{MAX}**. En particulier ici, le module de contrôle est conçu pour fermer l'interrupteur de retardement 7 après l'écoulement de la durée prédéterminée Δ**_{tfixe}**. A cet effet, le module de contrôle 5 comprend par exemple un minuteur.

Dans ce deuxième mode de réalisation, afin de pouvoir prendre en compte les conditions extérieures, le module de contrôle peut être configuré pour, notamment au moment de l'activation du premier élément chauffant 14, c'est-à-dire à **t₁**, définir la durée prédéterminée Δ_{tfixe} en fonction de la température **Tₑₓₜ** et/ou de la vitesse v de déplacement du véhicule et/ou en fonction de la tension **U₁** appliquée aux bornes du premier élément chauffant 14. Dans ce cas Δ**_{tfixe}** =Δ**_{tfixe}** (**Tₑₓₜ,v,U₁**).

En variante non illustrée, le système d'essuyage comprend n dispositifs d'essuyage dont chacun est équipé d'au moins un élément chauffant, où n est égal à 3 et 4. Dans cette variante, les activations de chaque élément chauffant sont autorisées par le module de contrôle 5, l'activation de l'un au moins des éléments chauffants étant retardée par rapport à l'un au moins des autres des éléments chauffants.

L'invention concerne encore un procédé d'activation pour un système d'essuyage tel que décrit ci-dessus.

Le procédé comprend les étapes successives suivantes, dans cet ordre :
- une activation du premier élément chauffant 14,
- une étape de temporisation,
- une activation du deuxième élément chauffant 24.

Selon un premier mode de réalisation, l'étape intermédiaire comprend avantageusement une sous-étape de mesure de l'intensité électrique **I₁** traversant le premier élément chauffant 14.

Selon un second mode de réalisation, l'étape intermédiaire correspond à une étape de temporisation d'une durée prédéterminée Δ**_{tfixe}**. Ici, avantageusement, l'étape intermédiaire ne comprend pas de sous-étape de mesure.

## Revendications

1. Système d'essuyage pour véhicule automobile comprenant :
- au moins deux balais d'essuie-glace (12,22) dont un premier balai d'essuie-glace (12) et un deuxième balai d'essuie-glace (22),
- un dispositif de chauffage comprenant un premier élément chauffant (14), configuré pour chauffer le premier balai d'essuie-glace (12), et un deuxième élément chauffant (24), configuré pour chauffer le deuxième balai d'essuie-glace (22),
- un dispositif d'alimentation électrique (6) configuré pour alimenter en électricité les premier (14) et deuxième (24) éléments chauffants et
- un module de contrôle (5),
le système d'essuyage étant **caractérisé en ce que** le module de contrôle (5) est configuré pour, lors de l'activation du dispositif de chauffage, retarder d'une durée de temporisation Δ**t** l'alimentation électrique (6) du deuxième élément chauffant (24) par rapport à l'alimentation électrique (6) du premier élément chauffant (14).

2. Système d'essuyage selon la revendication précédente, **caractérisé en ce que** les premier (14) et deuxième (24) éléments chauffants et le dispositif d'alimentation électrique (6) sont reliés électriquement par un même circuit électrique.

3. Système d'essuyage selon l'une quelconque des revendications précédentes, **caractérisé en ce que** le premier élément chauffant (14) et/ou le deuxième élément chauffant (24) sont issus au moins en partie d'un matériau dont la résistivité électrique augmente avec sa température.

4. Système d'essuyage selon la revendication précédente, **caractérisé en ce que** le module de contrôle (5) est configuré pour autoriser l'alimentation électrique du deuxième élément chauffant (24) à un instant t lorsque **I₁** ≤ **I_{MAX}** - **I₂,** où **I_{MAX}** correspond à une valeur limite d'intensité électrique prédéterminée, où **I₁** correspond à l'intensité électrique parcourant le premier élément chauffant (14) à l'instant t et où **I₂** correspond à l'intensité électrique qui parcourra le deuxième élément chauffant (24) lors du démarrage de l'alimentation électrique dudit deuxième élément chauffant (24).

5. Système d'essuyage selon la revendication précédente lorsque la revendication 3 dépend de la revendication 2, **caractérisé en ce que** le circuit électrique comprend en outre un fusible (8) traversé par un courant d'intensité **I_{F}** = **I₁** + **I₂**, le fusible (8) étant conçu pour ouvrir le circuit électrique lorsque **I_{F}** ≥ **I_{MAX}**.

6. Système d'essuyage selon l'une quelconque des revendications précédentes, **caractérisé en ce que** la durée de temporisation Δ**t** est une constante prédéterminée.

7. Système d'essuyage selon l'une quelconque des revendications 3 à 5, lorsqu'elles dépendent de la revendication 2, **caractérisé en ce que** le dispositif d'alimentation électrique (6) est conçu pour appliquer une tension **U** au circuit électrique, la tension **U** étant définie en fonction de la vitesse **v** du véhicule automobile et/ou de la température **Tₑₓₜ** à l'extérieur du véhicule automobile.

8. Système d'essuyage selon l'une quelconque des revendications précédentes, **caractérisé en ce que** le module de contrôle (5) comprend un interrupteur (7), dit interrupteur de retardement, connecté à un minuteur.

9. Système d'essuyage selon l'une quelconque des revendications précédentes, **caractérisé en ce que** l'un des balais d'essuie-glace (12, 22), dit balai conducteur, est situé sur le pare-brise avant d'un véhicule automobile et du côté conducteur, le premier élément chauffant (14) étant configuré pour chauffer le balai conducteur (12).

10. Procédé d'activation pour un système d'essuyage selon l'une quelconque des revendications précédentes, le procédé comprenant les étapes suivantes, dans cet ordre :
- activation du premier élément chauffant (14),
- temporisation,
- activation du deuxième élément chauffant (24).

11. Procédé d'activation selon la revendication précédente, **caractérisé en ce que** l'étape de temporisation comprend une sous-étape de détermination en temps réel de l'intensité électrique **I₁** traversant le premier élément chauffant (14).

12. Procédé d'activation selon la revendication précédente, **caractérisé en ce que** l'étape de temporisation correspond à une attente d'une durée prédéterminée.

## Patentansprüche

1. Wischersystem für Kraftfahrzeug, das Folgendes umfasst:
- mindestens zwei Scheibenwischerblätter (12, 22), darunter ein erstes Scheibenwischerblatt (12) und ein zweites Scheibenwischerblatt (22),
- eine Heizvorrichtung, die ein erstes Heizelement (14) umfasst, das ausgelegt ist, um das erste Scheibenwischerblatt (12) zu erhitzen, und ein zweites Heizelement (24), das ausgelegt ist, um das zweite Scheibenwischerblatt (22) zu erhitzen,
- eine Stromversorgungsvorrichtung (6), die konfiguriert ist, um das erste (14) und das zweite (24) Heizelement mit Strom zu versorgen, und
- ein Steuermodul (5),
Wischersystem **dadurch gekennzeichnet, dass** das Steuermodul (5) konfiguriert ist, um bei der Aktivierung der Heizvorrichtung die Stromversorgung (6) des zweiten Heizelements (24) im Vergleich zu der Stromversorgung (6) des ersten Heizelements (14) um eine Verzögerungsdauer Δt zu verzögern.

2. Wischersystem nach dem vorstehenden Anspruch, **dadurch gekennzeichnet, dass** das erste (14) und das zweite (24) Heizelement und die Stromversorgungsvorrichtung (6) elektrisch durch denselben elektrischen Kreislauf verbunden sind.

3. Wischersystem nach einem der vorstehenden Ansprüche, **dadurch gekennzeichnet, dass** das erste Heizelement (14) und/oder das zweite Heizelement (24) mindestens zum Teil aus einem Material hervorgehen, dessen spezifischer Widerstand mit seiner Temperatur steigt.

4. Wischersystem nach dem vorstehenden Anspruch, **dadurch gekennzeichnet, dass** das Steuermodul (5) konfiguriert ist, um die Stromversorgung des zweiten Heizelements (24) in einem Augenblick t zu gestatten, wenn T₁ ≤ I_{MAX} - I₂, wobei I_{MAX} einem vorbestimmten Grenzwert der Stromstärke entspricht, I₁ der Stromstärke, die durch das erste Heizelement (14) in dem Augenblick t läuft, entspricht, und wobei I₂ der Stromstärke entspricht, die das zweite Heizelement (24) beim Starten der Stromversorgung des zweiten Heizelements (24) durchlaufen wird.

5. Wischersystem nach dem vorstehenden Anspruch, wenn Anspruch 3 von Anspruch 2 abhängt, **dadurch gekennzeichnet, dass** der elektrische Kreislauf außerdem eine Sicherung (8) umfasst, die durch einen Strom mit Stärke I_{F} = I₁ + I₂ durchquert wird, wobei die Sicherung (8) konzipiert ist, um den elektrischen Kreislauf zu öffnen, wenn I_{F} ≥ I_{MAX} ist.

6. Wischersystem nach einem der vorstehenden Ansprüche, **dadurch gekennzeichnet, dass** die Verzögerungsdauer Δt eine vorbestimmte Konstante ist.

7. Wischersystem nach einem der Ansprüche 3 bis 5, wenn sie von Anspruch 2 abhängen, **dadurch gekennzeichnet, dass** die Stromversorgungsvorrichtung (6) konzipiert ist, um eine Spannung U an den elektrischen Kreislauf anzulegen, wobei die Spannung U in Abhängigkeit von der Geschwindigkeit v des Kraftfahrzeugs und/oder von der Temperatur Tₑₓₜ außerhalb des Kraftfahrzeugs definiert ist.

8. Wischersystem nach einem der vorstehenden Ansprüche, **dadurch gekennzeichnet, dass** das Steuermodul (5) einen Schalter (7), Verzögerungsschalter genannt, der mit einer Zeituhr verbunden ist, umfasst.

9. Wischersystem nach einem der vorstehenden Ansprüche, **dadurch gekennzeichnet, dass** eines der Scheibenwischerblätter (12, 22), Fahrerscheibenwischerblatt genannt, auf der vorderen Windschutzscheibe eines Kraftfahrzeugs und auf der Fahrerseite liegt, wobei das erste Heizelement (14) konfiguriert ist, um das Fahrerscheibenwischerblatt (12) zu erhitzen.

10. Verfahren zum Aktivieren für ein Wischersystem nach einem der vorstehenden Ansprüche, wobei das Verfahren die folgenden Schritte in dieser Reihenfolge umfasst:
- Aktivieren des ersten Heizelements (14),
- Verzögerung,
- Aktivieren des zweiten Heizelements (24).

11. Verfahren zum Aktivieren nach dem vorstehenden Anspruch, **dadurch gekennzeichnet, dass** der Verzögerungsschritt einen Unterschritt zum Bestimmen in Echtzeit der Stromstärke I₁, die das erste Heizelement (14) durchquert, umfasst.

12. Verfahren zum Aktivieren nach dem vorstehenden Anspruch, **dadurch gekennzeichnet, dass** der Verzögerungsschritt einem Warten während einer vorbestimmten Dauer entspricht.

## Claims

1. Motor vehicle wiper system, comprising:
- at least two windscreen wipers (12, 22), including a first windscreen wiper (12) and a second windscreen wiper (22),
- a heating device comprising a first heating element (14) designed to heat the first windscreen wiper (12) and a second heating element (24) designed to heat the second windscreen wiper (22),
- an electrical supply device (6) designed to supply electricity to the first (14) and second (24) heating elements, and
- a control module (5),
the wiper system being **characterized in that** the control module (5) is designed so as to delay, when the heating device is activated, the electricity supply (6) to the second heating element (24) compared to the electricity supply (6) to the first heating element (14), by a pause duration Δt.

2. Wiper system according to the preceding claim, **characterized in that** the first (14) and second (24) heating elements and the electrical supply device (6) are connected electrically by a single electric circuit.

3. Wiper system according to either one of the preceding claims, **characterized in that** the first heating element (14) and/or the second heating element (24) are made at least in part of a material whose electrical resistivity increases with its temperature.

4. Wiper system according to the preceding claim, **characterized in that** the control module (5) is designed to allow electricity to be supplied to the second heating element (24) at a time t when **I₁** ≤ **I_{MAX}** - **I₂**, where **I_{MAX}** corresponds to a predetermined limit value for the electrical intensity, where **I₁** corresponds to the electrical intensity passing through the first heating element (14) at time t and where **I₂** corresponds to the electrical intensity which will pass through the second heating element (24) when the supply of electricity to said second heating element (24) is started.

5. Wiper system according to the preceding claim when Claim 3 is dependent on Claim 2, **characterized in that** the electric circuit further comprises a fuse (8) through which passes a current of intensity **I_{F}** = **I₁** + **I₂**, the fuse (8) being designed to break the electric circuit when **I_{F}≥I_{MAX}**.

6. Wiper system according to any one of the preceding claims, **characterized in that** the pause duration Δ**t** is a predetermined constant.

7. Wiper system according to any one of Claims 3 to 5, where these are dependent on Claim 2, **characterized in that** the electrical supply device (6) is designed to apply a voltage **U** to the electric circuit, the voltage **U** being defined as a function of the speed **v** of the motor vehicle and/or the temperature **Tₑₓₜ** outside the motor vehicle.

8. Wiper system according to any one of the preceding claims, **characterized in that** the control module (5) comprises a switch (7) which is referred to as the delay switch and is connected to a timer.

9. Wiper system according to any one of the preceding claims, **characterized in that** one of the windscreen wipers (12, 22), referred to as the driver wiper, is located on the front windscreen of a motor vehicle and on the driver's side, the first heating element (14) being configured to heat the driver wiper (12).

10. Activation method for a wiper system according to any one of the preceding claims, the method comprising the following steps, in this order:
- activation of the first heating element (14),
- pause,
- activation of the second heating element (24).

11. Activation method according to the preceding claim, **characterized in that** the pause step comprises a sub-step of determining, in real-time, the electrical intensity **I₁** passing through the first heating element (14).

12. Activation method according to the preceding claim, **characterized in that** the pause step corresponds to a pause of predetermined duration.
